# EUROPEAN PATENT APPLICATION

(11) **EP 1 837 261 A2**
(43) Date of publication of application: **26.09.2007**
(21) Application number: 07001618.3
(22) Date of filing: 25.01.2007
(51) Int. Cl.: B60T 8/00

(54) **Brake control system**

(30) Priority: 24.03.2006 JP 2006081903
(71) Applicant: HITACHI, LTD., Chiyoda-ku Tokyo 100-8280 (JP)
(72) Inventor: Matsubara, Kenichiro Hitachi, Ltd. IPG, 1-chome Chiyoda-ku Tokyo 100-8220 (JP); Kobayashi, Hitoshi Hitachi, Ltd. IPG, 1-chome Chiyoda-ku Tokyo 100-8220 (JP); Innami, Toshiyuki Hitachi, Ltd. IPG, 1-chome Chiyoda-ku Tokyo 100-8220 (JP); Nishino, Kimio Hitachi, Ltd. IPG, 1-chome Chiyoda-ku Tokyo 100-8220 (JP); Sugawara, Toshiharu Hitachi, Ltd. IPG, 1-chome Chiyoda-ku Tokyo 100-8220 (JP)
(74) Representative: Beetz & Partner

(57) **Abstract**

At least one of first and second actuator driving devices (50 and 60) is supplied with electric power securely. When failure occurs in any one of main power line (100), auxiliary power line (101), first and second power supply lines (102, 103) and first and second relays (32, 33), the first to third relays (32, 33 and 34) are controlled to be opened and closed so that failure part is separated or failure part is isolated from part where failure does not occur or supply of electric power to failure part is cut off or electric power is supplied to part to which electric power cannot be supplied.

## Description

### BACKGROUND OF THE INVENTION

The present invention relates to a brake control system provided with a plurality of power supplies and more particularly to a brake control system that can operate predetermined brake calipers even when failure occurs in a power system.

There is known a prior-art brake control system including disk rotors rotating together with wheels of a vehicle, electro-mechanical calipers disposed near the disk rotors to give electric brake force to the disk rotors, relay units connected to the brake motors in the electro-mechanical calipers through driving circuits and main and auxiliary batteries connected to the relay units (refer to JP-A-11-171006, for example).

JP-A-11-171006 discloses that the driving circuits are energized by the main battery when it is not recognized that the main battery is consumed and the driving circuits are energized by the auxiliary battery instead of the main battery when it is recognized that the main battery is consumed.

### SUMMARY OF THE INVENTION

The above-mentioned conventional brake control system copes with consumption of the batteries but failure between the relay unit and the driving circuit is not considered sufficiently and there is room for improvement in this regard.

It is an object of the present invention to provide a reliable brake control system that can securely feed brake fluid or electric power required to operate predetermined brake calipers even when failure occurs in any one of power supply, actuator driving devices supplied with electric power from the power supply and power lines and power supply lines connected between the power supply and the actuator driving devices.

In order to achieve the above object, the present invention adopts the following configuration mainly.

The brake control system including at least 2 or more brake systems supplied with electric power from a plurality of power supplies to be operated independent of each other, comprises first power supply cutting-off means disposed between the power supplies and the brake systems and second power supply cutting-off means through which the brake systems are connected to each other.

The first power supply cutting-off means may be constituted by, for example, first and third relays described in embodiments and the second power supply cutting-off means may be constituted by second relay.

According to the present invention, there can be provided the reliable brake control system that can securely feed brake fluid or electric power required to operate predetermined brake calipers.

Other objects, features and advantages of the invention will become apparent from the following description of the embodiments of the invention taken in conjunction with the accompanying drawings.

### BRIEF DESCRIPTION OF THE DRAWINGS

Fig. 1 is a schematic diagram illustrating the whole configuration of a brake control system according to a first embodiment of the present invention;
Fig. 2 is a block diagram schematically illustrating a first actuator driving device used in the first embodiment of the present invention;
Fig. 3 is a flow chart showing a first routine executed by a relay controller used in the first embodiment of the present invention;
Fig. 4 is a flow chart showing a second routine executed by the relay controller used in the first embodiment of the present invention;
Fig. 5 is a table in which open and close states of first to third relays and supply and no supply of electric power to first and second actuator driving devices for failure parts and failure modes are summarized in the first embodiment of the present invention;
Fig. 6 is a schematic diagram illustrating the whole configuration of a brake control system according to a second embodiment of the present invention;
Fig. 7 is a flow chart showing a first routine executed by a relay controller used in the second embodiment of the present invention;
Fig. 8 is a table in which open and close states of first to third relays and supply and no supply of electric power to first and second actuator driving devices for failure parts and failure modes are summarized in the second embodiment of the present invention;
Fig. 9 is a schematic diagram illustrating the whole configuration of a brake control system according to a third embodiment of the present invention;
Fig. 10 is a block diagram schematically illustrating a third actuator driving device used in the third embodiment of the present invention;
Fig. 11 is a schematic diagram illustrating the whole configuration of a brake control system according to a fourth embodiment of the present invention;
Fig. 12 is a block diagram schematically illustrating a fourth actuator driving device used in the fourth embodiment of the present invention; and
Fig. 13 is a schematic diagram illustrating the whole configuration of a brake control system according to a fifth embodiment of the present invention.

### DESCRIPTION OF THE EMBODIMENTS

The brake control system according to embodiments described below has the following configuration.
(1) The brake control system having at least two or more brake systems supplied with electric power from a plurality of power supplies to be operated independent of each other, includes first power supply cutting-off means disposed between the power supplies and the brake systems and second power supply cutting-off means through which the brake systems are connected to each other.
(2) In the brake control system described in (1), the brake systems are connected through the second power supply cutting-off means at downstream side of the first power supply cutting-off means.
(3) In the brake control system described in (1) or (2), when all the power supplies can supply electric power, all the second power supply cutting-off means are made to function and when at least one power supply cannot supply electric power, at least one of the second power supply cutting-off means connected to the brake system supplied with electric power from the at least one power supply that cannot supply electric power is not made to function.
(4) In the brake control system described in (1) or (2), when all the power supplies can supply electric power, all the second power supply cutting-off means are not made to function and when at least one power supply cannot supply electric power, all the second power supply cutting-off means connected to the brake system supplied with electric power from the at least one power supply that cannot supply electric power are made to function.
(5) The brake control system comprises:
   a first brake system including a first actuator driving device and for applying brake on at least one of a plurality of wheels;
   a second brake system including a second actuator driving device and for applying brake on at least one wheel except the wheel braked by the first brake system, of the plurality of wheels;
   a first relay connected on the way of power line for supplying electric power from a main power supply to the first brake system;
   a second relay connected on the way of power line for supplying electric power from the main power supply to the second brake system through the first relay;
   a third relay connected on the way of power line connecting an auxiliary power supply and power line connecting between the second relay and the second brake system; and
   a relay controller for controlling to open and close the first, second and third relays.
(6) The brake control system comprises;
   a relay controller for controlling to open and close first, second and third relays;
   the first relay connected on the way of power line for supplying electric power from a main power supply to a first brake system for applying brake on at least one of a plurality of wheels;
   the second relay connected on the way of power line for supplying electric power from the main power supply through the first relay to a second brake system for applying brake on at least one wheel except the wheel braked by the first brake system, of the plurality of wheels;
   the third relay connected on the way of power line connecting an auxiliary power supply and power line connecting between the second relay and the second brake system;
   the relay controller controlling to close the first and second relays and open the third relay so that electric power from the main power supply is supplied to the first and second brake systems when the main and auxiliary power supplies and the first and second brake systems can be operated normally;
   the relay controller controlling to open the first relay and close the second and third relays so that electric power from the auxiliary power supply is supplied to the first and second brake systems when any abnormality occurs in the main power supply and the auxiliary power supply and the first and second brake systems can be operated normally.

The brake control systems according to first to fifth embodiments of the present invention are now described with reference to the accompanying drawings.

### [EMBODIMENT 1]

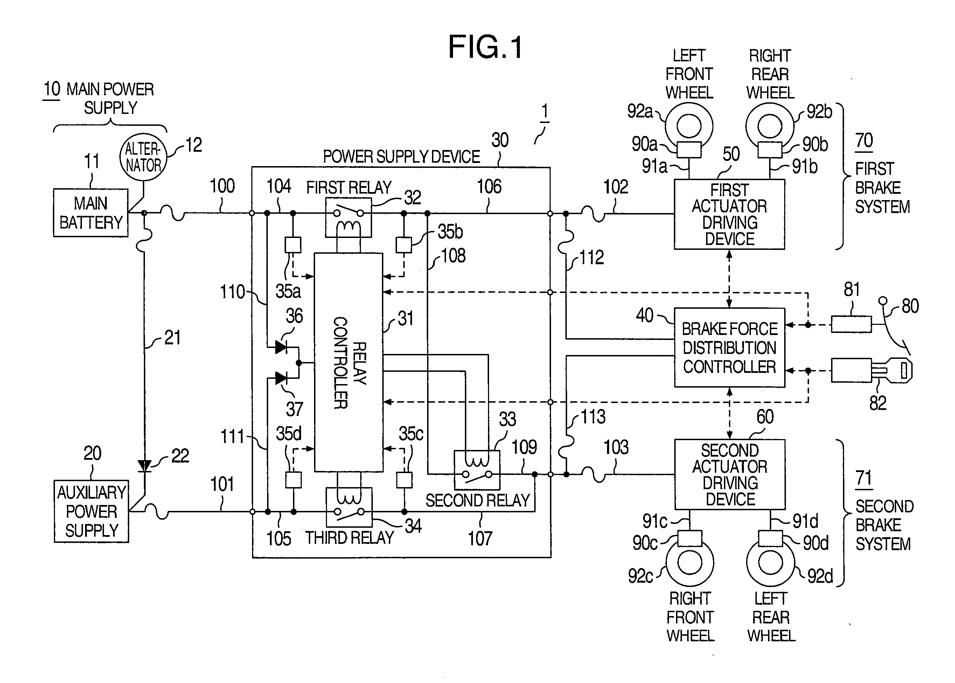

Fig. 1 is a schematic diagram illustrating the whole configuration of the brake control system 1 according to the first embodiment of the present invention. In Fig. 1, broken lines with arrow represent signal lines and the direction of arrow represents the flow of signal.

As shown in Fig. 1, the brake control system 1 includes a main power supply 10, an auxiliary power supply 20, a power supply device 30, a brake force distribution controller 40, a brake sensor 81, a first brake system 70 and a second brake system 71.

The main power supply 10 includes a main battery 11 and an alternator 12.

The main battery 11 is charged by the alternator 12 coupled with an engine, for example, and supplies the charged electric power to the power supply device 30 through main power line 100.

The auxiliary power supply 20 is supplied with electric power from the main power supply 10 through power line 21 branching from the main power line 100 and supplies the charged electric power to the power supply device 30 and the like through auxiliary power line 101. A diode 22 allows current to flow from the main power supply 10 to the auxiliary power supply 20 and prevents current from flowing from the auxiliary power supply 20 to the main power supply 10.

The main battery 11 has the role of supplying electric power to even other devices than the brake control system 1 but the auxiliary power supply 20 is provided in order to supply electric power to devices requiring reliability particularly like the brake control system 1.

The alternator 12 is driven by an engine not shown to generate electric power. The generated electric power is converted into DC electric power within the alternator 12 to charge the main battery 11 and the auxiliary power supply 20 and be also supplied to the power supply device 30 and the like. Further, a motor generator may be used instead of the alternator 12.

A nominal voltage of the main battery 11 is, for example, 12V, 24V, 36V or the like, unless otherwise specified.

The main power supply 10 may be a DC-to-DC converter of the voltage drop type or booster type that can convert electric power charged in the battery or generated by the generator into DC voltage to supply it to the power supply device 30 and the like. Consequently, electric power supplied to the power supply device 30 and the like is more stabilized and accordingly the operation of the whole brake control system 1 can be stabilized.

Further, the auxiliary power supply 20 may use battery, capacitor, condenser or the like and may be equipped with a charging and discharging circuit in order to improve the accumulation characteristic of electric power.

In addition, a constant-voltage circuit, a constant-current circuit or the like may be provided between the main power supply 10 and the auxiliary power supply 20 to thereby charge the auxiliary power supply 20. Consequently, since the charging voltage or charging current of the auxiliary power supply 20 is more stabilized to always keep the charged state of the auxiliary power supply 20 in the suitable state, electric power supplied to the power supply device 30 and the like is more stabilized.

Further, the auxiliary power supply 20 can be incorporated into the power supply device 30 to be integrated into one device. Consequently, since the auxiliary power line 101 is not required to thereby reduce the occurrence probability of failure correspondingly, the reliability of the brake control system 1 is improved as a whole.

The brake sensor 81 is to detect the brake force required by a driver and is constituted by, for example, a liquid pressure sensor for detecting liquid pressure within a master cylinder not shown, a stroke sensor for detecting a stroke of a brake pedal 80, a pedal force sensor for detecting pedal force on the brake pedal 80 or the like.

It is desired that a plurality of sensors such as liquid pressure sensors, stroke sensors, pedal force sensors and the like are combined to construct the brake sensor 81. Consequently, since the brake force required by the driver can be detected more exactly, feeling of brake control can be improved. Further, since the plurality of sensors can be combined to detect the driver's brake requirement securely even if a signal from one sensor is interrupted or stopped, the fail safe performance is improved.

The brake force distribution controller 40 is constituted by an arithmetic processing circuit, which calculates the brake force required by the driver on the basis of a signal from the brake sensor 81 and decides brake force distribution to each wheel on the basis of the calculated brake force. The brake force for each wheel is converted into a brake force command value to be sent to first and second actuator driving devices 50 and 60.

The brake force distribution controller 40 may be supplied with vehicle speed, wheel speed, acceleration in the traveling direction of vehicle, lateral acceleration of vehicle, yaw rate of vehicle and the like to decide the brake force distribution on the basis of these inputted values. Consequently, since the brake force for each wheel can be controlled more suitably in response to motion of vehicle, the stability of vehicle at the times when the vehicle is steered and when the vehicle travels on a low-friction road can be improved and a stop distance of vehicle can be shortened.

The brake force distribution controller 40 is supplied with electric power from the power supply device 30 through both of power line 112 branching from first power supply line 102 and power line 113 branching from second power supply line 103. Accordingly, even if supply of electric power from any one of the power lines is interrupted or stopped, electric power is continuously supplied from the other power line and accordingly the brake force distribution controller 40 can be operated stably.

The brake force distribution controller 40 is supplied with a signal of the brake sensor 81 and a signal of an ignition switch 82 and is started in response to the signals.

Further, the brake force distribution controller 40 may be supplied with signals from door sensor, seat sensor, parking brake and the like to be started in response to the signals. Consequently, the brake force distribution controller 40 can be started before the driver operates the brake pedal 80 or the ignition switch 82 and accordingly the more stable brake force can be generated.

The signals of the brake sensor 81 and the ignition switch 82 are supplied to a relay controller 31 included in the power supply device 30.

The brake force distribution controller 40 makes bidirectional communication with the first and second actuator driving devices 50 and 60 and transmits and receives brake force command value, failure information, vehicle information and the like to and from the devices.

The first brake system 70 includes the first actuator driving device 50 and brake calipers 90a, 90b. Further, the second brake system 71 includes the second actuator driving device 60 and brake calipers 90c, 90d.

In the first embodiment, the brake caliper 90a is mounted in a left front wheel, the brake caliper 90b in a right rear wheel, the brake caliper 90c in a right front wheel and the brake caliper 90d in a left rear wheel, although other combinations of the brake calipers and the wheels may be used. Concretely, the first brake system 70 may apply brake on the right and left front wheels and the second brake system 71 may apply brake on the right and left rear wheels. Alternatively, the first brake system 70 may apply brake on the left front and rear wheels and the second brake system 71 may apply brake on the right front and rear wheels.

The first and second actuator driving devices 50 and 60 is constituted by an oil pressure generator, which generates oil pressure on the basis of the brake force command value supplied from the brake force distribution controller 40. The generated oil pressure is fed to the brake calipers 90 through oil pressure pipes 91.

The first actuator driving device 50 is now described.

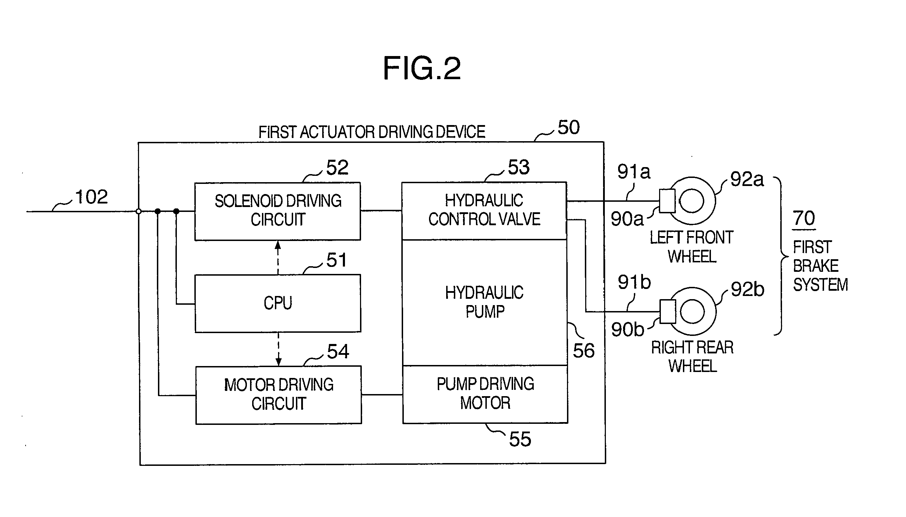

Fig. 2 is a block diagram schematically illustrating the first actuator driving device 50. In Fig. 2, broken lines with arrow represent signal lines and the direction of arrow represents the flow of signal.

As shown in Fig. 2, the first actuator driving device 50 includes CPU 51, solenoid driving circuit 52, hydraulic control valve 53, motor driving circuit 54, pump driving motor 55 and hydraulic pump 56.

The CPU 51, the solenoid driving circuit 52 and the motor driving circuit 54 are supplied with electric power through the first power supply line 102. The CPU 51 supplies a control signal to the solenoid driving circuit 54 and the motor driving circuit 54 on the basis of the brake force command value supplied from the brake force distribution controller 40. The solenoid driving circuit 52 supplies suitable electric power to a solenoid not shown for controlling the hydraulic control valve 53 on the basis of the control signal from the CPU 51. The motor driving circuit 54 supplies suitable electric power to the pump driving motor 55 on the basis of the control signal from the CPU 51. The hydraulic pump 56 is driven by the pump driving motor 55 to generate high-pressure brake fluid. The hydraulic control valve 53 controls pressure of the high-pressure brake fluid generated by the hydraulic pump 56 for each of the brake calipers 90a, 90b. The pressure-controlled brake fluid is finally fed to the brake calipers 90a, 90b through the oil pressure pipes 91a, 91b.

The structure and operation of the second actuator driving device 60 are fundamentally the same as those of the first actuator driving device 50.

The first actuator driving device 50 can feed the brake fluid having different pressure to each of the two brake calipers 90a, 90b.

As described above, the first actuator driving device 50 of the embodiment adjusts the brake fluid pressure to predetermined pressure on the basis of the brake force command value from the brake force distribution controller 40 to feed it to the brake calipers 90a, 90b. Accordingly, the first actuator driving device is not necessarily required to have the structure shown in Fig. 2 as far as it has the same function as described above and the first actuator driving device may adopt other structures.

In Fig. 1, the first and second actuator driving devices 50 and 60 are independently supplied with electric power from the power supply device 30 through the first and second power supply lines 102 and 103, respectively. Accordingly, even if supply of electric power supplied through any one of the power supply lines is interrupted or stopped and the actuator driving device connected thereto stops, the other actuator driving device can be continuously supplied with electric power and be operated continuously. Consequently, since at least 2 brake calipers are controlled, the vehicle can be decelerated stably in response to the driver's requirement.

The brake caliper 90 is composed of cylinder, piston, pad and the like not shown. The piston is driven by the brake fluid fed from the first and second actuator driving devices 50, 60 and the pad coupled with the piston is pressed on a disk rotor 92.

The disk rotors 92 are rotated together with the wheels not shown. The brake torque exerted on the disk rotors 92 become the brake force exerted between the wheels and a road.

The power supply device 30 includes the relay controller 31, first and third relays 32 and 34 constituting first power supply cutting-off means, a second relay 33 constituting second power supply cutting-off means and voltage monitor circuits 35.

The power supply device 30 is supplied with electric power from the main and auxiliary power supplies 10 and 20 through the main and auxiliary power lines 100 and 101, respectively, and supplies the supplied electric power to the first and second actuator driving devices 50 and 60 and the brake force distribution controller 40 through the first and second power supply lines 102 and 103.

The relay controller 31 is constituted by an arithmetic processing circuit, which controls to open and close the first to third relays 32, 33 and 34 on the basis of signals of the brake sensor 81, the ignition switch 82, the voltage monitor circuits 35 and the like.

The relay controller 31 is supplied with the signals of the brake sensor 81 and the ignition switch 82 to be started in response to the signals.

Further, the relay controller 31 may be supplied with signals from door sensor, seat sensor, parking brake and the like to be started in response to the signals. Consequently, the relay controller 31 can be started before the driver operates the brake pedal 80 or the ignition switch 82 and accordingly the more stable brake force can be generated.

The relay controller 31 is supplied with electric power from the main and auxiliary power supplies 10 and 20 through both of power line 110 branching from power line 104 connected to the main power line 100 and power line 111 branching from power line 105 connected to the auxiliary power line 101. Accordingly, even if supply of electric power from any one of the power lines is interrupted or stopped, electric power is continuously supplied from the other power line and accordingly the relay controller 31 can be operated stably to control opening and closing of the first to third relays 32, 33 and 34.

A diode 36 allows current to flow from the power line 104 to the relay controller 31 and prevents current from flowing from the relay controller 31 to the power line 104. Similarly, a diode 37 allows current to flow from the power line 105 to the relay controller 31 and prevents current from flowing from the relay controller 31 to the power line 105. Consequently, the power lines 104 and 105 are isolated electrically and accordingly even if failure occurs in any one of the main and auxiliary power lines 100 and 101, the failure does not influence others.

In the power supply device 30, the power line 104 is connected to power line 106 through the first relay 32. Further, power line 108 branching from the power line 106 is connected to power line 109 through the second relay 33. The power line 105 is connected to power line 107 through the third relay 34. The power line 107 is connected to the power line 109. The power line 106 is connected to the first power supply line 102. The power line 109 is connected to the second power supply line 103. In the configuration as described above, the first to third relays 32, 33 and 34 are controlled to be opened and closed, so that electric power from the main power supply 10 can be supplied to both of the first and second power supply lines 102 and 103 and electric power from the auxiliary power supply 20 can be supplied to both of the first and second power supply lines 102 and 103.

The first to third relays 32, 33 and 34 have contacts controlled to be opened and closed independently by the relay controller 31. The first to third relays 32, 33 and 34 may be any of normally opened relay or normally closed relay, although the normally opened relay is desired from the viewpoint of preventing the main and auxiliary power supplies 10 and 20 from being consumed due to dark current. Further, the first to third relays 32, 33 and 34 may be mechanical relays, semiconductor relays or the like.

The first and second relays 32 and 33 are normally closed, so that electric power supplied to the power supply device 30 through the main power line 100 is supplied partly through the power line 104, the first relay 32, the power line 106 and the first power supply line 102 to the first actuator driving device 50 and the like and partly through the power line 104, the first relay 32, the power lines 106, 108, the second relay 33, the power line 109 and the second power supply line 103 to the second actuator driving device 60 and the like. Further, the third relay 34 is normally opened, so that electric power supplied to the power supply device 30 through the auxiliary power line 101 is supplied to only the relay controller 31 and is not supplied to the first and second actuator driving devices 50 and 60. However, if any failure occurs in the brake control system 1, the electric power supplied to the power supply device 30 through the auxiliary power line 101 is supplied partly through the power line 105, the third relay 34, the power lines 107, 109, the second relay 33, the power lines 108, 106 and the first power supply line 102 to the first actuator driving device 50 and the like and partly through the power line 105, the third relay 34, the power lines 107, 109 and the second power supply line 103 to the second actuator driving device 60 and the like.

As described above, according to the brake control system 1 of the first embodiment of the present invention, in any case of the normal state and the abnormal state, electric power of the main and auxiliary power supplies 10 and 20 can be supplied to the brake force distribution controller 40, the first and second actuator driving devices 50 and 60 and the like to operate the brake calipers 90 securely, so that the vehicle can be decelerated stably in accordance with the driver's requirement and the stability of the vehicle can be improved.

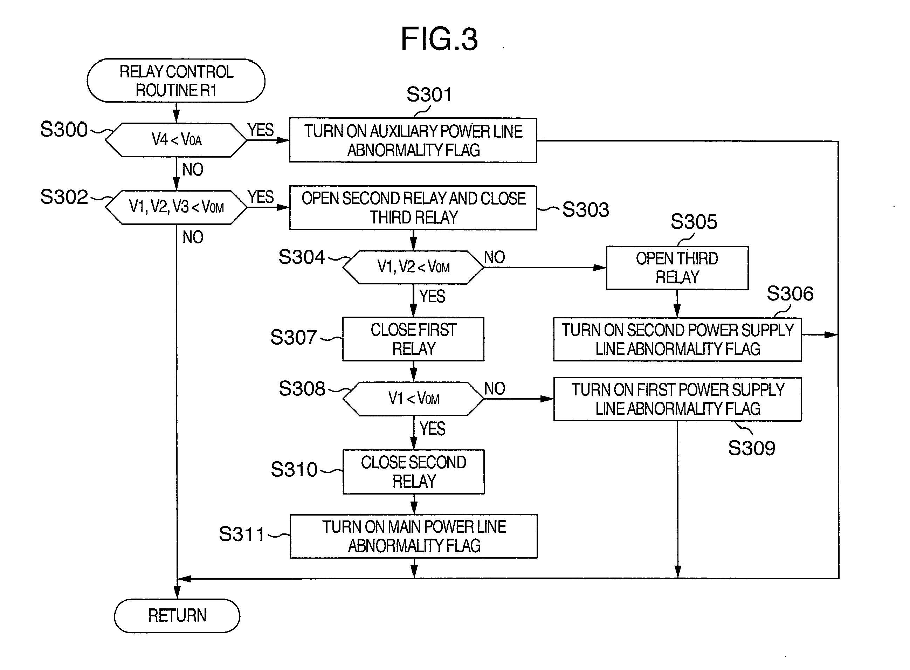

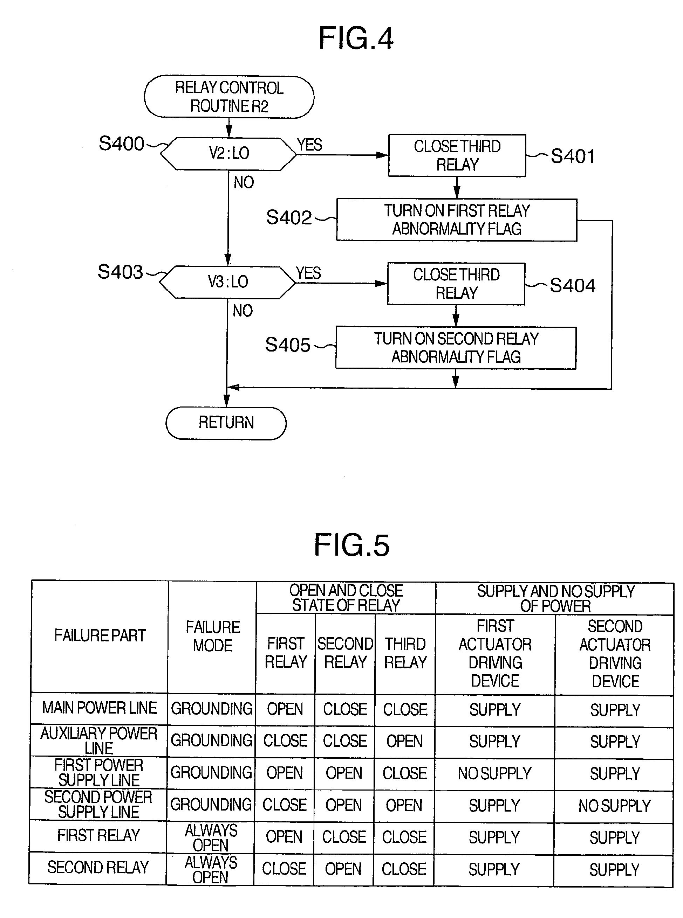

Referring now to Figs. 3 and 4, concrete processing of the relay controller 31 included in the brake control system 1 according to the embodiment of the present invention is described.

Fig. 3 is a flow chart showing a first routine (hereinafter referred to as relay control routine R1) executed by the relay controller 31. The relay control routine R1 is started repeatedly at intervals of predetermined time.

In Figs. 3 and 4, V1 represents a voltage at the power line 104 acquired from the voltage monitor circuit 35a, that is, a voltage at the main power line 100. V2 represents a voltage at the power line 106 acquired from the voltage monitor circuit 35b, that is, a voltage at the first power supply line 102. V3 represents a voltage at the power line 107 acquired from the voltage monitor circuit 35c, that is, a voltage at the second power supply line. V4 represents a voltage at the power line 105 acquired from the voltage monitor circuit 35d, that is, a voltage at the auxiliary power line 101.

When the relay control routine R1 is started, processing in step 300 is first executed.

In step 300, it is judged whether the voltage V4 is lower than a predetermined value V0A or not. When the voltage V4 is lower than the value V0A, processing in step 301 is executed and when the voltage V4 is not lower than the value V0A, processing in step 302 is executed.

The predetermined value V0A is set to any value lower than the voltage of the auxiliary power supply 20 when the brake control system 1 is in the usual operation state. Consequently, since it is detected that abnormality occurs in the auxiliary power line 101 and suitable measures can be implemented, the fail safe performance of the brake control system 1 can be improved.

In step 301, processing for turning on an auxiliary power line abnormality flag is executed. Thus, the present routine is ended. The power supply device 30 can issue an alarm for auxiliary power line abnormality in response to turning on of the flag.

In step 302, it is judged whether the voltages V1, V2 and V3 are lower than a predetermined value V0M or not. When the voltages V1, V2 and V3 are lower than the value V0M, processing in step 303 is executed and when the voltages V1, V2 and V3 are not lower than the value V0M, the present routine is ended.

The predetermined value V0M is set to any value higher than the maximum value of the respective minimum operation voltages of the power supply device 30, the brake force distribution controller 40 and the first and second actuator driving devices 50 and 60 and lower than the voltage of the main power supply 10 in case where the brake control system 1 is in the usual operation state. Consequently, even if abnormality occurs in the main power line 100 and the voltage at the main power line 100 is lowered, the abnormality can be detected before the power supply device 30 or the brake force distribution controller 40 or the first or second actuator driving device 50 or 60 stops and suitable measures can be implemented. Accordingly, the fail safe performance of the brake control system 1 is improved.

In step 303, the second relay 33 is opened and the third relay 34 is closed, so that electric power is supplied from the main power supply 10 through the main power line 100, the power line 104, the first relay 32 and the power line 106 to the first actuator driving device 50 and the brake force distribution controller 40 and further electric power is supplied from the auxiliary power supply 20 through the auxiliary power line 101, the power line 105, the third relay 34 and the power lines 107 and 109 to the second actuator driving device 60 and the brake force distribution controller 40. Consequently, if failure occurs in any of the main power line 100 and the first power supply line 102, the brake calipers 90c and 90d of the second brake system 71 can be operated by means of the latter circuit configuration. On the other hand, if failure occurs in the second power supply line 103, the brake calipers 90a and 90b of the first brake system 70 can be operated by means of the former circuit configuration.

Unless otherwise specified, failure in the main power line 100 contains failure in the main power supply 10, failure in the auxiliary power line 101 contains failure in the auxiliary power supply 20, failure in the first power supply line 102 contains failure in the first actuator driving device 50 and failure in the second power supply line 103 contains failure in the second actuator driving device 60.

In step 304, it is judged whether the voltages V1 and V2 are lower than the predetermined value V0M or not. When the voltages V1 and V2 are lower than the predetermined value V0M, processing in step 307 is executed and when the voltages V1 and V2 are not lower than the predetermined value V0M, processing in step 305 is executed.

In step 305, the third relay 34 is opened. Since the processing leads to the step 305 when failure occurs in the second power supply line 103, supply of electric power to the second power supply line 103 and the second actuator driving device 60 can be cut off by means of the above processing.

In step 306, a second power supply line abnormality flag is turned on in response to the processing in step 305. Thus, the present routine is ended. The power supply device 30 can issue an alarm for second power supply line abnormality in response to turning on of the flag.

In step 307, the first relay 32 is opened. Since it is considered that the processing leads to the step 307 when failure occurs in the first power supply line 102, supply of electric power to the first power supply line 102 and the first actuator driving device 50 can be cut off by means of the above processing.

In step 308, it is judged whether the voltage V1 is lower than the predetermined value V0M or not. When the voltage V1 is lower than the predetermined value V0M, processing in step 310 is executed and when the voltage V1 is not lower than the predetermined value V0M, processing in step 309 is executed.

Since the processing leads to the step 309 when failure occurs in the first power supply line 102, a first power supply line abnormality flag is turned on in step 309. Thus, the present routine is ended. The power supply device 30 can issue an alarm for first power supply line abnormality in response to turning on of the flag.

In step 310, the second relay 33 is closed, so that electric power is supplied from the auxiliary power supply 20 through the auxiliary power line 101, the power line 105, the third relay 34, the power line 107, the power line 109, the second relay 33, the power line 108 and the power line 106 to the first actuator driving device 50 and the brake force distribution controller 40 and further electric power is supplied from the auxiliary power supply 20 through the auxiliary power line 101, the power line 105, the third relay 34, the power line 107 and the power line 109 to the second actuator driving device 60 and the brake force distribution controller 40. Consequently, the brake calipers 90a, 90b of the first brake system 70 and the brake calipers 90c, 90d of the second brake system 71 can be operated.

Since the processing leads to the step 310 when failure occurs in the main power line 100, a main power line abnormality flag is turned on in step 311. Thus, the present routine is ended. The power supply device 30 can issue an alarm for main power line abnormality in response to turning on of the flag.

The failure in the main power line 100, the auxiliary power line 101, the first power supply line 102 and the second power supply line 103 in the relay control routine is, for example, grounding and reduction in voltage caused by the grounding.

As described above, according to the brake control system 1 of the first embodiment of the present invention, failure occurred in any one of the main power supply 10, the auxiliary power supply 20, the main power line 100, the auxiliary power line 101, the first and second power supply lines 102, 103 and the first and second actuator driving devices 50, 60 can be detected and the first to third relays 32, 33 and 34 can be controlled to be opened and closed in accordance with the part where the failure occurs. Accordingly, electric power can be supplied to at least one brake system to thereby operate the brake calipers 90 thereof.

In other words, since the relay control routine R1 is to specify the part where failure occurs to thereby implement the suitable processing in accordance with the specified failure part, the processing conforming to the flow chart shown in Fig. 3 is not necessarily required to be implemented as far as the similar processing can be implemented, and optimum structure can be adopted properly.

Fig. 4 is a flow chart showing a second routine (hereinafter referred to as relay control routine R2) executed by the relay controller 31. The relay control routine R2 is started repeatedly at intervals of predetermined time.

When the relay control routine R2 is started, processing in step 400 is executed.

In step 400, it is judged whether the voltage V2 is equal to an LO level or not. When the voltage V2 is equal to the LO level, processing in step 401 is executed and when the voltage V2 is not equal to the LO level, processing in step 403 is executed.

In step 401, the third relay 34 is closed, so that electric power is supplied from the auxiliary power supply 20 through the auxiliary power line 101, the power line 105, the third relay 34, the power line 107, the power line 109, the second relay 33, the power line 108 and the power line 106 to the first actuator driving device 50 and the brake force distribution controller 40 and further electric power is supplied from the auxiliary power supply 20 through the auxiliary power line 101, the power line 105, the third relay 34, the power line 107 and the power line 109 to the second actuator driving device 60 and the brake force distribution controller 40. Consequently, the brake calipers 90a, 90b of the first brake system 70 and the brake calipers 90c, 90d of the second brake system 71 can be operated.

Since the processing leads to the step 401 when failure that the contact of the first relay 32 is always opened, for example, occurs, a first relay abnormality flag is turned on in step 402. Thus, the present routine is ended. The power supply device 30 can issue an alarm for first relay abnormality in response to turning on of the flag.

In step 403, it is judged whether the voltage V3 is equal to the LO level or not. When the voltage V3 is equal to the LO level, processing in step 404 is executed and when the voltage V3 is not equal to the LO level, the present routine is ended.

In step 404, the third relay 34 is closed, so that electric power is supplied from the main power supply 10 through the main power line 100, the power line 104, the first relay 32 and the power line 106 to the first actuator driving device 50 and the brake force distribution controller 40 and further electric power is supplied from the auxiliary power supply 20 through the auxiliary power line 101, the power line 105, the third relay 34, the power line 107 and the power line 109 to the second actuator driving device 60 and the brake force distribution device 40. Consequently, the brake calipers 90a, 90b of the first brake system 70 and the brake calipers 90c, 90d of the second brake system 71 can be operated.

Since the processing leads to the step 404 when failure that contact of the second relay 33 is always opened, for example, occurs, a second relay abnormality flag is turned on in step 405. Thus, the present routine is ended. The power supply device 30 can issue an alarm for second relay abnormality in response to turning on of the flag.

As described above, according to the brake control system 1 of the first embodiment of the present invention, since occurrence of failure in any one of the first relay 32 and the second relay 33 is detected and the third relay 34 is controlled to be opened and closed in accordance with the part where failure occurs, electric power can be supplied to both of the first and second brake systems 70 and 71 to thereby operate the brake calipers 90.

In other words, since the relay control routine R2 is to specify the part where failure occurs to implement suitable processing in accordance with the specified failure part, the processing conforming to the flow chart shown in Fig. 4 is not necessarily required to be implemented as far as the similar processing can be executed and optimum structure can be adopted properly.

Fig. 5 is a table in which open and close states of first to third relays 32, 33 and 34 and supply and no supply of electric power to first and second actuator driving devices 50 and 60 for failure parts and failure modes decided in accordance with the relay control routines R1 and R2 are summarized.

As described above, according to the brake control system 1 of the first embodiment of the present invention, when failure occurs in any one of the main power line 100, the auxiliary power line 101, the first power supply line 102, the second power supply line 103, the first relay 32 and the second relay 33, the first to third relays 32, 33 and 34 are controlled to be opened and closed so that the failure part is separated or the failure part is isolated from the part where failure does not occur or supply of electric power to the failure part is cut off or electric power is supplied to the part to which electric power cannot be supplied. Consequently, since electric power can be supplied to at least any one of the first and second actuator driving devices 50 and 60 securely, the vehicle can be stopped at predetermined deceleration to thereby ensure the security of driver and fellow passenger.

In the first embodiment, when the engine not shown is started, the first relay 32 can be opened and the third relay 34 can be closed, so that the first and second actuator driving devices 50 and 60 and the brake force distribution controller 40 can be applied with predetermined voltage by the auxiliary power supply 20 without influence of voltage drop in the main battery 11 caused by starting of engine even while the engine is being started by a starter not shown connected to the main battery 11. Consequently, the brake force can be ensured even while the engine is being started.

In the configuration that the first to third relays 32, 33 and 34 are connected as shown in Fig. 1, the following measures can be used in order to detect and verify the open and close states thereof.

In other words, when the voltage at the main power line 100 is lowered, only the voltage V1 of the voltages V1 to V4 becomes the LO level. Further, when the voltage at the auxiliary power line 101 is lowered, only the voltage V4 of the voltages V1 to V4 becomes the LO level. Moreover, when the voltage at the first power supply line 102 is lowered, only the voltage V2 of the voltages V1 to V4 becomes the LO level.
Further, when the voltage at the second power supply line 103 is lowered, only the voltage V3 of the voltages V1 to V4 becomes the LO level. Consequently, it can be judged that the first to third relays 32, 33 and 34 are controlled to be opened and closed in accordance with the relay control routine R1.

Furthermore, when the contact of the first relay 32 is opened, the voltages V2, V3 and V4 are substantially equal to one another. When the contact of the second relay 33 is opened, the voltages V3 and V4 are substantially equal to each other and accordingly it can be judged that the third relay is controlled to be opened and closed in accordance with the relay control routine R2.

Such verification method can be used to confirm the structure and control routines according to the first embodiment of the present invention shown in Figs. 1 to 5 easily.

### [EMBODIMENT 2]

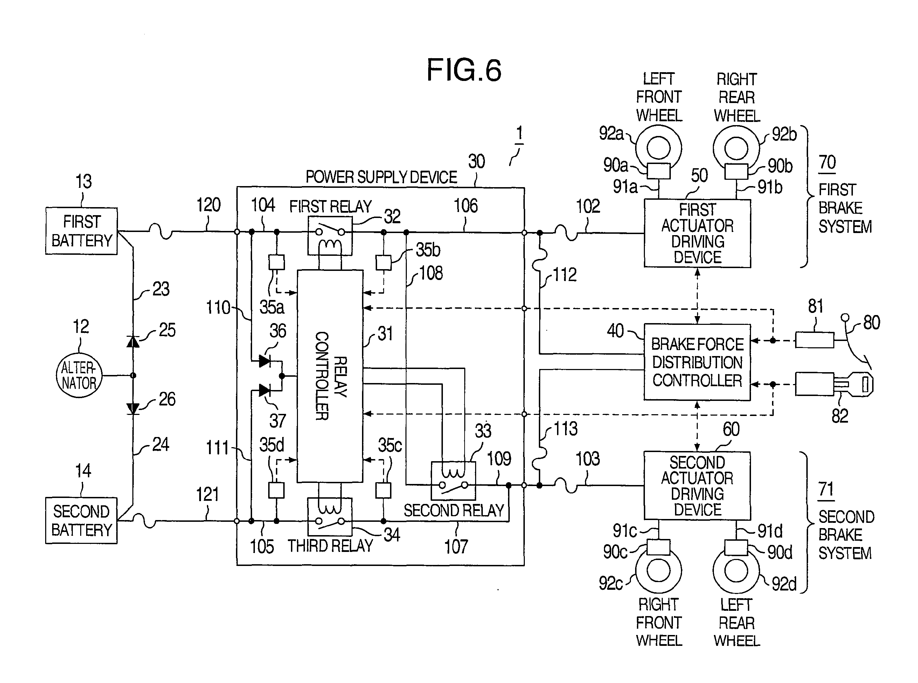

Fig. 6 is a schematic diagram illustrating the whole configuration of the brake control system 1 according to the second embodiment of the present invention. The same elements as those of the first embodiment are designated by the same reference numerals and description thereof is omitted.

The second embodiment is different from the first embodiment in that a first battery 13 is provided instead of the main power supply 10, a second batter 14 is provided instead of the auxiliary power supply 20, a first power line 120 is provided instead of the main power line 100, a second power line 121 is provided instead of the auxiliary power line 101 and the alternator 12 is connected through a power line 23 to the first battery 13 and through a power line 24 to the second battery 14.

A diode 25 allows current to flow from the alternator 12 to the first battery 13 and prevents current from flowing from the first batter 13 to the alternator 12. Similarly, a diode 26 allows current to flow from the alternator 12 to the second battery 14 and prevents current from flowing from the second battery 14 to the alternator 12.

Other different points reside in that the second relay 33 is normally opened and the third relay 34 is normally closed. Consequently, electric power supplied to the power supply device 30 through the first power line 120 is supplied through the power line 104, the first relay 21, the power line 106 and the first power supply line 102 to the first actuator driving device 50 and the like and furthermore electric power supplied to the power supply device 30 through the second power line 121 is supplied through the power line 105, the third relay 34, the power line 107, the power line 109 and the second power supply line 103 to the second actuator driving device 60 and the like. However, when any failure occurs in the brake control system 1, electric power supplied to the power supply device 30 through the first power line 120 is supplied through the power line 104, the first relay 32, the power line 106, the power line 108, the second relay 33, the power line 109 and the second power supply line 103 to even the second actuator driving device 60 and the like. Further, electric power supplied to the power supply device 30 through the second power line 121 is supplied through the power line 105, the third relay 34, the power line 107, the power line 109, the second relay 33, the power line 108, the power line 106 and the first power supply line 102 to even the first actuator driving device 50 and the like.

As described above, according to the brake control system 1 of the second embodiment of the present invention, in any case of the normal state and the abnormal state, electric power of the first and second batteries 13 and 14 can be supplied to the brake force distribution controller 40 and the first and second actuators 50, 60 to thereby operate the brake calipers 90 securely. Consequently, the vehicle can be decelerated stably in response to the driver's requirement and the security of the vehicle can be improved.

In the second embodiment, since the power supply device 30 is supplied with electric power from both of the first and third batteries 13, 14 normally, the capacity of the first and second batteries 13, 14 can be reduced as compared with that of the main battery 11 in the first embodiment.

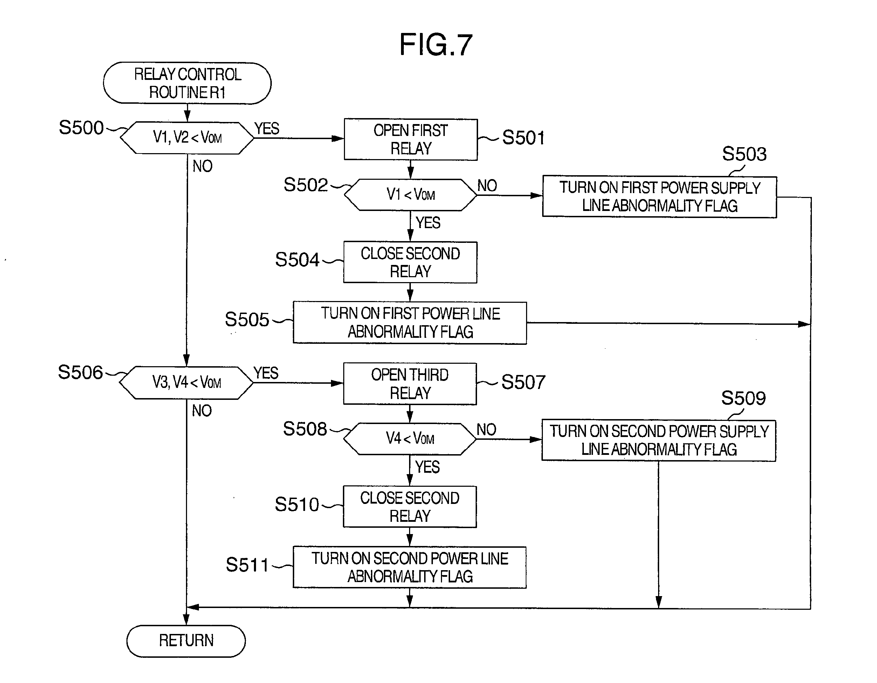

The relay control routine R1 of the second embodiment is now described with reference to Fig. 7.

Fig. 7 is a flow chart showing the relay control routine R1. The relay control routine R1 is started repeatedly at intervals of predetermined time.

When the relay control routine R1 is started, processing in step 500 is first executed.

In step 500, it is judged whether the voltages V1 and V2 are lower than the predetermined value V0M or not. When the voltages V1 and V2 are lower than the predetermined value V0M, processing in step 501 is executed and when the voltages V1 and V2 are not lower than the predetermined value V0M, processing in step 506 is executed.

In step 501, the first relay 32 is executed. Since it is considered that the processing leads to the step 501 when failure occurs in the first power supply line 102, supply of electric power to the first power supply line 102 and the first actuator driving device 50 can be cut off by means of the above processing.

In step 502, it is judged whether the voltage V1 is lower than the predetermined value V0M or not. When the voltage V1 is lower than the predetermined value V0M, processing in step 504 is executed and when the voltage V1 is not lower than the predetermined value V0M, processing in step 503 is executed.

Since the processing leads to the step 503 when failure occurs in the first power supply line 102, the first power supply line abnormality flag is turned on in step 503. Thus, the present routine is ended. The power supply device 30 can issue an alarm for first power supply line abnormality in response to turning on of the flag.

In step 504, the second relay 33 is closed, so that electric power is supplied from the second battery 14 through the second power line 121, the power line 105, the third relay 34, the power line 107, the power line 109, the second relay 33, the power line 108 and the power line 106 to the first actuator driving device 50 and the brake force distribution controller 40 and furthermore electric power is supplied from the second battery 14 through the second power line 121, the power line 105, the third relay 34, the power line 107 and the power line 109 to the second actuator driving device 60 and the brake force distribution controller 40. Consequently, the brake calipers 90a, 90b of the first brake system 70 and the brake calipers 90c, 90d of the second brake system 71 can be operated.

Since the processing leads to the step 504 when failure occurs in the first power line 120, the first power line abnormality flag is turned on in step 505. Thus, the present routine is ended. The power supply device 30 can issue an alarm for first power line abnormality in response to turning on of the flag.

In step 506, it is judged whether the voltages V3 and V4 are lower than the predetermined value V0M or not. When the voltages V3 and V4 are lower than the predetermined value V0M, processing in step 507 is executed and when the voltages V3 and V4 are not lower than the predetermined value V0M, the present routine is ended.

In step 507, the third relay 34 is opened. Since it is considered that the processing leads to the step 507 when failure occurs in the second power supply line 103, supply of electric power to the second power supply line 103 and the second actuator driving device 60 can be cut off by means of the above processing.

In step 508, it is judged whether the voltage V4 is lower than the predetermined value V0M or not. When the voltage V4 is lower than the predetermined value V0M, processing in step 510 is executed and when the voltage V4 is not lower than the predetermined value V0M, processing in step 509 is executed.

Since the processing leads to the step 509 when failure occurs in the second power supply line 103, the second power supply line abnormality flag is turned on in step 509. Thus, the present routine is ended. The power supply device 30 can issue an alarm for second power supply line abnormality in response to turning on of the flag.

In step 510, the second relay 33 is closed, so that electric power is supplied from the first battery 13 through the first power line 120, the power line 104, the first relay 32 and the power line 106 to the first actuator driving device 50 and the brake force distribution controller 40 and furthermore electric power is supplied from the first battery 13 through the first power line 120, the power line 104, the first relay 32, the power line 106, the power line 108, the second relay 33 and the power line 109 to the second actuator driving device 60 and the brake force distribution controller 40. Consequently, the brake calipers 90a, 90b of the first brake system 70 and the brake calipers 90c, 90d of the second brake system 71 can be operated.

Since the processing leads to the step 510 when failure occurs in the second power line 121, the second power line abnormality flag is turned on in step 511. Thus, the present routine is ended. The power supply device 30 can issue an alarm for second power line abnormality in response to turning on of the flag.

As described above, according to the brake control system 1 of the second embodiment of the present invention, since occurrence of failure in any one of the first battery 13, the second battery 14, the first power line 120, the second power line 121, the first power supply line 102, the second power supply line 103, the first actuator driving device 50 and the second actuator driving device 60 can be detected and the first to third relays 32, 33 and 34 can be controlled to be opened and closed in accordance with the failure part, electric power can be supplied to at least one brake system and the brake calipers 90 thereof can be operated.

In other words, since the relay control routine R1 is to specify the part where failure occurs to thereby implement suitable measures in accordance with the specified failure part, the processing conforming to the flow chart shown in Fig. 3 is not required to be implemented as far as the similar processing can be executed, and optimum structure can be adopted properly.

The relay control routine R2 of the second embodiment is now described with reference to Fig. 4.

The relay control routine R2 of the second embodiment is different from that of the first embodiment shown in Fig. 4 in that the second relay 33 is closed instead of the third relay 34 in step 401, so that electric power is supplied from the second battery 14 through the second power line 121, the power line 105, the third relay 34, the power line 107, the power line 109, the second relay 33, the power line 108 and the power line 106 to the first actuator driving device 50 and the brake force distribution controller 40 and furthermore electric power is supplied from the second battery 14 through the second power line 121, the power line 105, the third relay 34, the power line 107 and the power line 109 to the second actuator driving device 60 and the brake force distribution controller 40. Consequently, the brake calipers 90a, 90b of the first brake system 70 and the brake calipers 90c, 90d of the second brake system 71 can be operated.

Another different point resides in that the second relay 33 is closed instead of the third relay 34 in step 404. Consequently, electric power is supplied from the first battery 13 through the first power line 120, the power line 104, the first relay 32 and the power line 106 to the first actuator driving device 50 and the brake force distribution controller 40. Furthermore, electric power is supplied from the first battery 13 through the first power line 120, the power line 104, the first relay 32, the power line 106, the power line 108, the second relay 33 and the power line 109 to the second actuator driving device 60 and the brake force distribution controller 40. Consequently, the brake calipers 90a, 90b of the first brake system 70 and the brake calipers 90c, 90d of the second brake system 71 can be operated.

In step 405, a third relay abnormality flag is turned on.

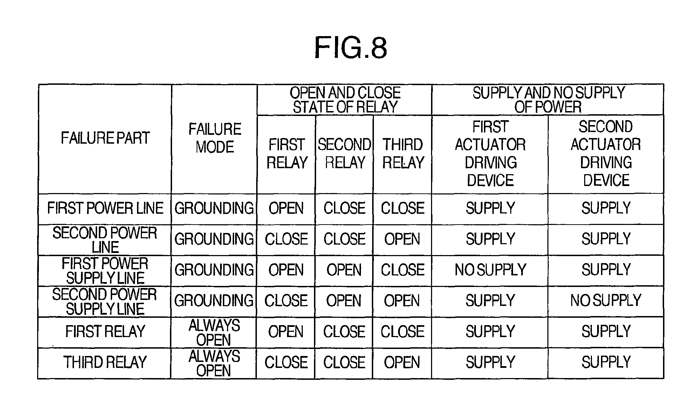

Fig. 8 is a table in which open and close states of the first to third relays 32, 33 and 34 and supply and no supply of electric power to first and second actuator driving devices 50 and 60 for failure parts and failure modes decided in accordance with the relay control routines R1 and R2 are summarized.

As described above, according to the brake control system 1 of the second embodiment of the present invention, when failure occurs in any one of the first power line 120, the second power line 121, the first power supply line 102, the second power supply line 103, the first relay 32 and the third relay 34, the first to third relays 32, 33 and 34 are controlled to be opened and closed so that the failure part is separated or the failure part is isolated from the part where failure does not occur or supply of electric power to the failure part is cut off or electric power is supplied to the part to which electric power cannot be supplied. Consequently, since electric power can be supplied at least any one of the first and second actuator driving devices 50 and 60 securely, the vehicle can be stopped at predetermined deceleration to thereby ensure the security of driver and fellow passenger.

### [EMBODIMENT 3]

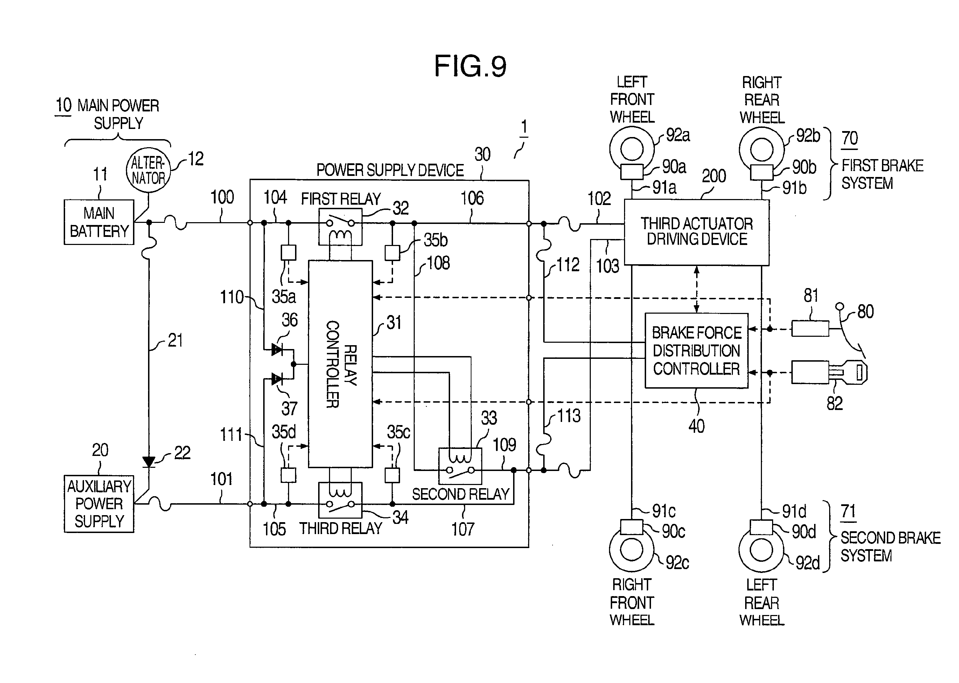

Fig. 9 is a schematic diagram illustrating the whole configuration of the brake control system 1 according to the third embodiment of the present invention. The same elements as those of the first embodiment are designated by the same reference numerals and description thereof is omitted.

The third embodiment is different from the first embodiment in that a third actuator driving device 200 is provided instead of the first and second actuator driving devices 50, 60 and the first and second power supply lines 102, 103 are connected to the third actuator driving device 200.

In the third embodiment, the number of actuator driving devices can be reduced as compared with the first embodiment and the number of failure modes can be reduced correspondingly.

In the third embodiment, the power supply device 30 and the third actuator driving device 200 can be integrated, so that it is not necessary to provide the first and second power supply lines 102 and 103 and the occurrence probability of failure is reduced correspondingly. Accordingly, the reliability of the whole brake control system 1 is improved.

In Fig. 9, the third actuator driving device 200 is constituted by an oil pressure generator, which generates oil pressure on the basis of the brake force command value supplied from the brake force distribution controller 40. The generated oil pressure is fed to the brake calipers 90 through the oil pressure pipes 91.

The third actuator driving device is now described.

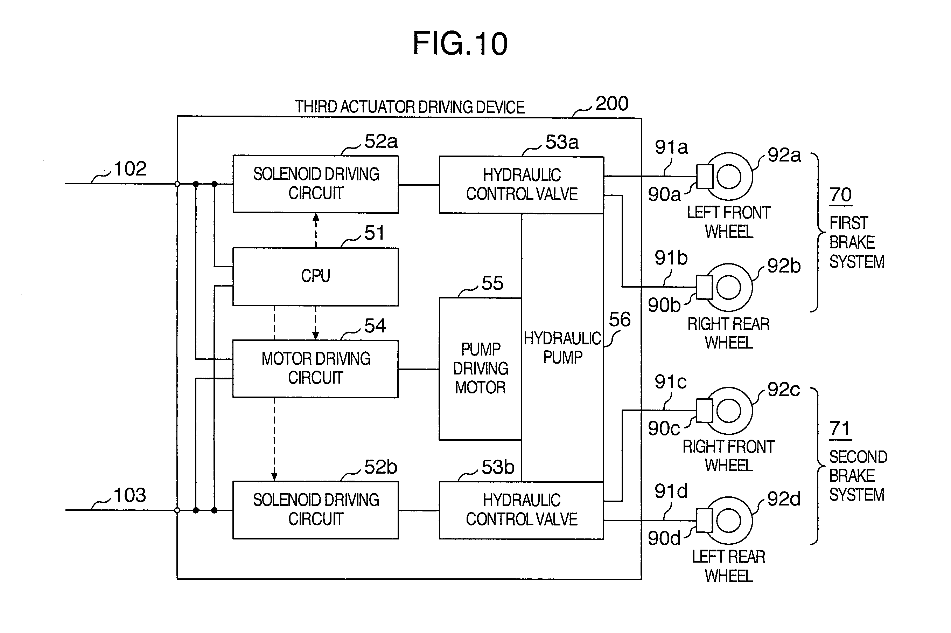

Fig. 10 is a block diagram schematically illustrating the third actuator driving device 200.

The same elements as those of the first actuator driving device 50 shown in Fig. 2 are designated by the same reference numerals and description thereof is omitted.

The third actuator driving device 200 is different from the first actuator driving device 50 in that the solenoid driving circuit 52 and the hydraulic control valve 53 are provided two in number and the CPU 51 and the motor driving circuit 54 are supplied with electric power from both of the first and second power supply lines 102 and 103.

The CPU 51 and the motor driving circuit 54 are supplied with electric power from both of the first and second power supply lines 102, 103 and accordingly even if electric power from any one of the power supply lines is interrupted or stopped, the CPU 51 and the motor driving circuit 54 can be continuously operated.

Further, the solenoid driving circuits 52a and 52b are independently supplied with electric power from the power supply device 30 through the first and second power supply lines 102 and 103, respectively. Accordingly, even if supply of electric power supplied through any one of the power supply lines is interrupted or stopped and the solenoid driving circuit 52 connected thereto stops, the other solenoid driving circuit 52 can be continuously supplied with electric power and be operated continuously. Consequently, since at least 2 brake calipers 90 are controlled, the vehicle can be decelerated stably in response to with the driver's requirement.

According to the brake control system 1 of the third embodiment of the present invention, in the same manner as the first embodiment, when failure occurs in any one of the main power line 100, the auxiliary power line 101, the first power supply line 102, the second power supply line 103, the first relay 32 and the second relay 33, the first to third relays 32, 33 and 34 are controlled to be opened and closed so that the failure part is separated or the failure part is isolated from the part where failure does not occur or supply of electric power to the failure part is cut off or electric power is supplied to the part to which electric power cannot be supplied. Consequently, since electric power can be supplied to the third actuator driving device 200 securely, the vehicle can be stopped at predetermined deceleration to thereby ensure the security of driver and fellow passenger.

### [EMBODIMENT 4]

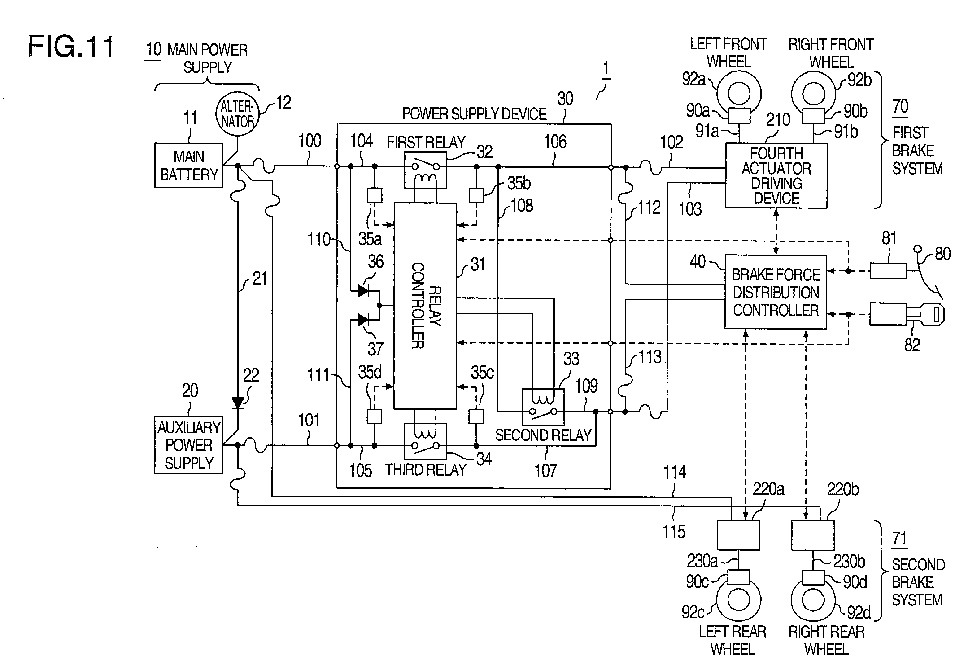

Fig. 11 is a schematic diagram illustrating the whole configuration of the brake control system 1 according to the fourth embodiment of the present invention. The same elements as those of the first embodiment are designated by the same reference numerals and description thereof is omitted.

The fourth embodiment is different from the first embodiment in that fourth and fifth actuator driving devices 210 and 220 are provided instead of the first and second actuator driving devices 50 and 60, the first and second power supply lines 102 and 103 are connected to the fourth actuator driving device 210, power line 114 branching from the main power line 100 is connected to the fifth actuator driving device 220a, power line 115 branching from the auxiliary power line 101 is connected to the fifth actuator driving device 220b and the brake calipers 90c and 90d are constituted by electro-mechanical calipers.

In the fourth embodiment, two of the four brake calipers 90 are constituted by the electro-mechanical calipers and accordingly the length of the oil pressure pipes can be shortened correspondingly.

Furthermore, in the fourth embodiment, the power supply device 30 and the fourth actuator driving device 210 can be integrated. Since it is not necessary to provide the first and second power supply lines 102 and 103 and the occurrence probability of failure is reduced correspondingly, the reliability of the whole brake control system 1 is improved.

In Fig. 11, the fourth actuator driving device 210 is constituted by an oil pressure generator, which generates oil pressure on the basis of the brake force command value supplied from the brake force distribution controller 40. The generated oil pressure is fed to the brake calipers 90a and 90b through the oil pressure pipes 91a and 91b.

The fourth actuator driving device 210 is now described.

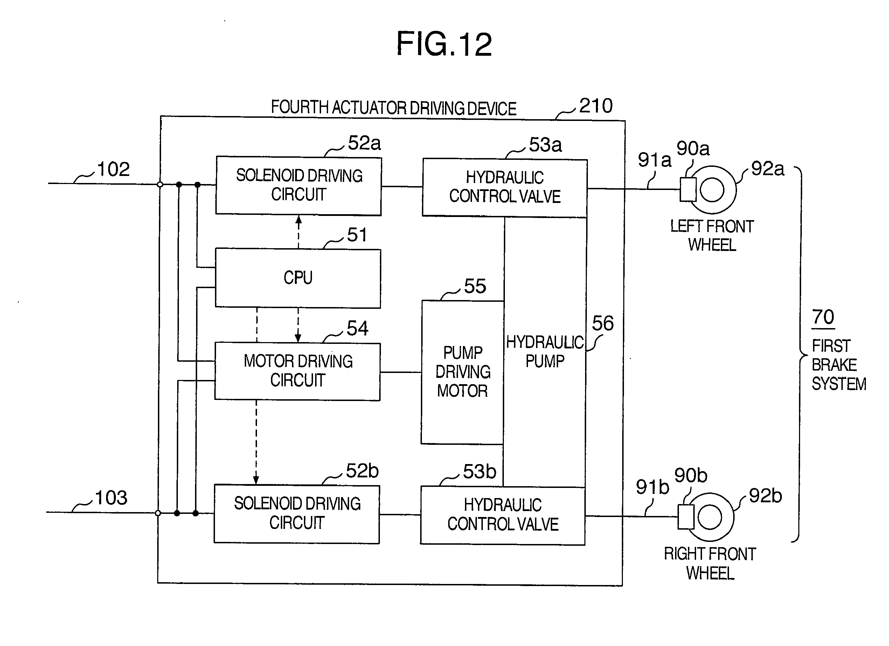

Fig. 12 is a block diagram schematically illustrating the fourth actuator driving device 210.

The same elements as those of the first actuator driving device shown in Fig. 2 are designated by the same reference numerals and description thereof is omitted.

The fourth actuator driving device 210 is different from the first actuator driving device 50 in that the solenoid driving circuit 52 and the hydraulic control valve 53 are provided two in number and the CPU 51 and the motor driving circuit 54 are supplied with electric power from both of the first and second power supply lines 102 and 103.

The CPU 51 and the motor driving circuit 54 are supplied with electric power from both of the first and second power supply lines 102 and 103 and accordingly even if supply of electric power from any one of the power supply lines is interrupted or stopped, the CPU 51 and the motor driving circuit 54 can be continuously operated.

Further, the solenoid driving circuits 52a and 52b are independently supplied with electric power from the power supply device 30 through the first and second power supply lines 102 and 103, respectively. Accordingly, even if supply of electric power from any one of the power supply lines is interrupted or stopped and the solenoid driving circuit 52 connected thereto stops, the other solenoid driving circuit 52 can be continuously supplied with electric power and be operated continuously. Consequently, since at least one brake caliper 90 is controlled, the vehicle can be decelerated stably in response to the driver's requirement.

In Fig. 11, the fifth actuator driving devices 220 are constituted by motor driving circuit and are connected to the brake calipers 90c and 90d through three-phase power lines 230a and 230b.

The brake calipers 90c and 90d constituted by electro-mechanical calipers includes, for example, motor, conversion mechanism for converting torque of the motor into thrust force of piston, the piston, pad and the like, although not shown.

In the brake calipers 90c and 90d, the motor thereof is rotated by three-phase electric power supplied from the fifth actuator driving device 220 and the torque generated by the motor is converted into thrust force by the conversion mechanism, so that the piston is driven by the thrust force and the pad coupled with the piston is pressed on the disk rotor 92.

Supply of electric power to the fifth actuator driving device 220 is not required to be implemented as shown in Fig. 11 and even other methods may be used.

According to the brake control system 1 of the fourth embodiment of the present invention, in the same manner as the first embodiment, when failure occurs in any one of the main power line 100, the auxiliary power line 101, the first power supply line 102, the second power supply line 103, the first relay 32 and the second relay 33, the first to third relays 32, 33 and 34 are controlled to be opened and closed so that the failure part is separated or the failure part is isolated from the part where failure does not occur or supply of electric power to the failure part is cut off or electric power is supplied to the part to which electric power cannot be supplied. Consequently, since electric power can be supplied to the fourth actuator driving device 210 securely, the vehicle can be stopped at predetermined deceleration to thereby ensure the security of driver and fellow passenger.

### [EMBODIMENT 5]

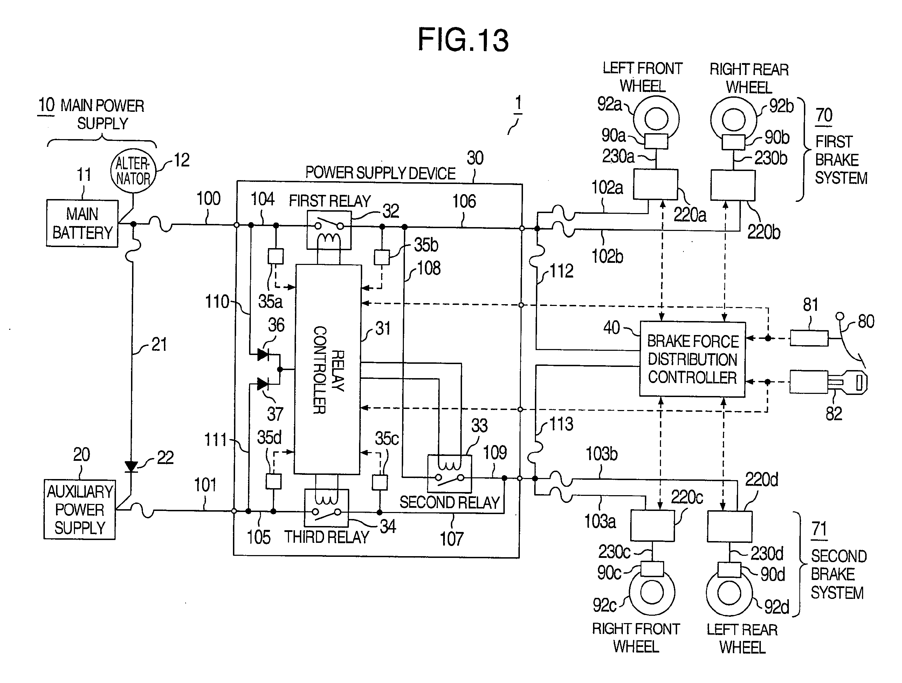

Fig. 13 is a schematic diagram illustrating the whole configuration of the brake control system 1 according to the fifth embodiment of the present invention.

The same elements as those of the first embodiment are designated by the same reference numerals and description thereof is omitted.

The fifth embodiment is different from the first embodiment in that the fifth actuator driving devices 220 are provided instead of the first and second actuator driving devices 50 and 60, first power supply lines 102a and 102b are connected to the fifth actuator driving devices 220a and 220b, second power supply lines 103a and 103b are connected to fifth actuator driving devices 220c and 220d and the brake calipers 90 are constituted by electro-mechanical calipers.

In the fifth embodiment, since all of the 4 brake calipers 90 are constituted by electro-mechanical calipers, oil pressure and the pipes thereof can be eliminated.

In Fig. 13, the fifth actuator driving devices 220 are constituted by motor driving circuit and are connected to the brake calipers 90 through three-phase power lines.

The brake caliper 90 constituted by electro-mechanical calipers includes, for example, motor, conversion mechanism for converting torque of the motor into thrust force of piston, the piston, pad and the like, although not shown.

In the brake caliper 90, the motor thereof is rotated by three-phase electric power supplied from the fifth actuator driving device 220 and the torque generated by the motor is converted into thrust force by the conversion mechanism, so that the piston is driven by the thrust force and the pad coupled with the piston is pressed on the disk rotor 92.

According to the brake control system 1 of the fifth embodiment of the present invention, in the same manner as the first embodiment, when failure occurs in any one of the main power line 100, the auxiliary power line 101, the first power supply line 102, the second power supply line 103, the first relay 32 and the second relay 33, the first to third relays 32, 33 and 34 are controlled to be opened and closed so that the failure part is separated or the failure part is isolated from the part where failure does not occur or supply of electric power to the failure part is cut off or electric power is supplied to the part to which electric power cannot be supplied. Consequently, since electric power can be supplied to the fifth actuator driving devices 220 securely, the vehicle can be stopped at predetermined deceleration to thereby ensure the security of driver and fellow passenger.

The embodiments of the present invention have been described with reference to the drawings, although the embodiments are mere examples and the present invention can be implemented in various modified and improved aspects on the basis of knowledge of the person skilled in the art.

In this connection, features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A brake control system (1) including at least 2 or more brake systems (70, 71) supplied with electric power from a plurality of power supplies (10, 20, 13, 14) to be operated independent of each other, comprising first power supply cutting-off means (32, 34) disposed between the power supplies and the brake systems and second power supply cutting-off means (33) through which the brake systems (70, 71) are connected to each other.

2. A brake control system (1) according to Claim 1, wherein the brake systems (70, 71) are connected to each other through the second power supply cutting-off means (33) at downstream side of the first power supply cutting-off means (32, 34).

3. A brake control system (1) according to Claim 1 or 2, wherein when all the power supplies (10, 20, 13, 14) can supply electric power, all the second power supply cutting-off means (33) are made to function and when at least one power supply cannot supply electric power, at least one of the second power supply cutting-off means (33) connected to the brake system (70, 71) supplied with electric power from the at least one power supply that cannot supply electric power is not made to function.

4. A brake control system (1) according to Claim 2 or 3, wherein when all the power supplies (10, 20, 13, 14) can supply electric power, all the second power supply cutting-off means (33) are made to function and when at least one power supply cannot supply electric power, at least one of the second power supply cutting-off means (33) connected to the brake system (70, 71) supplied with electric power from the at least one power supply that cannot supply electric power is not made to function.

5. A brake control system (1) according to at least one of the preceding Claims, wherein when all the power supplies (10, 20, 13, 14) can supply electric power, all the second power supply cutting-off means (33) are not made to function and when at least one power supply cannot supply electric power, all the second power supply cutting-off means (33) connected to the brake system (70, 71) supplied with electric power from the at least one power supply that cannot supply electric power are made to function.

6. A brake control system (1) according to at least one of Claims 2-5, wherein when all the power supplies (10, 20, 13, 14) can supply electric power, all the second power supply cutting-off means (33) are not made to function and when at least one power supply cannot supply electric power, all the second power supply cutting-off means (33) connected to the brake system (70, 71) supplied with electric power from the at least one power supply that cannot supply electric power are made to function.

7. A brake control system (1) comprising:
a first brake system (70) including a first actuator driving device (50) and for applying brake on at least one of a plurality of wheels;
a second brake system (71) including a second actuator driving device (60) and for applying brake on at least one wheel except the wheel braked by the first brake system (70), of the plurality of wheels;
a first relay (32) connected on the way of power line (100, 104, 106, 102) for supplying electric power from a main power supply (10, 13) to the first brake system (70);
a second relay (33) connected on the way of power line (108, 109, 103) for supplying electric power from the main power supply (10, 13) to the second brake system (71) through the first relay (32);
a third relay (34) connected on the way of power line (101, 107) connecting an auxiliary power supply (20, 14) and power line (109, 103) connecting between the second relay (33) and the second brake system (71); and
a relay controller (31) for controlling to open and close the first, second and third relays (32, 33, 34).

8. A brake control system (1) comprising:
a relay controller (31) for controlling to open and close first, second and third relays (32, 33, 34);
the first relay (32) connected on the way of power line (100, 106, 102) for supplying electric power from a main power supply (10, 13) to a first brake system (70) for applying brake on at least one of a plurality of wheels;
the second relay (33) connected on the way of power line (108, 109, 103) for supplying electric power from the main power supply (10, 13) through the first relay (32) to a second brake system (71) for applying brake on at least one wheel except the wheel braked by the first brake system (70), of the plurality of wheels;
the third relay (34) connected on the way of power line (101, 107) connecting an auxiliary power supply (20, 14) and power line (109, 103) connecting between the second relay (33) and the second brake system (71);
the relay controller (31) controlling to close the first and second relays (32, 33) and open the third relay (34) so that electric power from the main power supply (10, 13) is supplied to the first and second brake systems (70, 71) when the main power supply (10, 13), the auxiliary power supply (20, 14) and the first and second brake systems (70, 71) can be operated normally;
the relay controller (31) controlling to open the first relay (32) and close the second and third relays (33, 34) so that electric power from the auxiliary power supply (20, 14) is supplied to the first and second brake systems (70, 71) when abnormality occurs in the main power supply (10, 13) and the auxiliary power supply (20, 14) and the first and second brake systems (70, 71) can be operated normally.
